# EUROPEAN PATENT APPLICATION

(11) **EP 1 876 322 A1**
(43) Date of publication of application: **09.01.2008**
(21) Application number: 05743771.7
(22) Date of filing: 28.04.2005
(51) Int. Cl.: E06B 9/76, F16B 7/04

(54) **COUPLING MEANS FOR ACCESSORIES USED TO OPERATE ROLLER BLINDS**

(71) Applicant: GAVIOTA SIMBAC, S.L., 03630 Sax (Alicante) (ES)
(72) Inventor: GUILLEN CHICO, Francisco, E-03630 Sax (ES)
(74) Representative: Esteban Perez-Serrano, Maria Isabel
(86) International application number: PCT/ES2005/070055
(87) International publication number: WO 2006/117419

(57) **Abstract**

The object of the present invention is union means for accessories for operating winding blinds which due to their special configuration ensure an unequivocal insertion of the crank tube and the transmission mechanism or of the actuation crank and the tube, also ensuring that the loads are transmitted between the crank tube and the mechanism to which said tube is joined, freeing the union elements from having to withstand said loads so that said union elements can be made of lightweight materials with low requirements for withstanding loads, allowing to obtain a lighter mechanism.

## Description

### OBJECT OF THE INVENTION

The object of the present invention are union means for accessories for operating winding blinds that due to their special configuration ensure an unequivocal insertion between the crank tube and the transmission mechanism or between the actuation crank and the tube.

In addition, this special configuration ensures that the loads are transmitted from the crank tube to the mechanism attached to said tube, freeing the union means from having to withstand said loads.

In this way, the union means can be made of lightweight materials with low requirements for withstanding loads, allowing to obtain a lighter mechanism.

The invention is also characterised by the union means that allow clipping the tube onto the transmission element or the actuation crank.

### BACKGROUND OF THE INVENTION

Systems are well known in the prior art that use tubes to join a transmission element and the actuation crank of winding blinds, the various elements being joined by rivets or screws with the resulting drawbacks when having to disassemble the mechanism.

Also known are systems such as described in Utility Model with publication number ES0129769U, which employs a groove provided in the end of the transmission element to introduce lugs provided on the tube, closing the union with a cap.

These systems require an additional operation on the tube to weld the lugs that area inserted in the groove with the resulting increase in cost.

In addition, in the aforementioned systems the union means, in this case the lugs, support the torsion loads, resulting in breakage due to fatigue of the spokes of the lug-tube unions.

All of these drawbacks are solved by the invention described below.

### DESCRIPTION OF THE INVENTION

The present invention relates to union means for accessories of winding blinds which by their special configuration ensure an unequivocal connection of the crank tube to the transmission mechanism or of the actuation crank to the tube.

It also provides a union element that facilitates clipping the tube to the transmission element or to the actuation crank.

The system is composed of a handle, which will be turned, joined to a crank that is unequivocally inserted in its tube due to their special configuration.

The tube has a circular outer perimeter, while its inner perimeter in which the transmission element and the actuation crank are inserted has circular arc segments and straight segments

The end of the crank that joins to the tube has an outer perimeter identical to the inner perimeter of the tube, with the circular arc segments and straight segments in the same arrangement.

In this way the loads are transmitted from the crank to the tube by the straight segments, as they cannot turn about each other.

In the end of the crank is inserted a union element with a head that has the same cross-section as the outer perimeter of the crank, so that this head stops against the end of the crank.

Starting from the head, the union element has a central part with the same diameter as the inner diameter of the crank, from which emerges an elongated protrusion followed by a lug perpendicular, to said protrusion. A tab also emerges from said central part.

When said tab of the union element enters the inner perimeter of the crank, the elongated protrusion flexes such that the lug slides in the inner perimeter of the crank and inserts in an orifice of the end of the crank, so that the head of the union element stops against the end of the crank at this time.

The crank, in which the union element is already inserted, is then placed inside the tube. The tube has an orifice coincident with the orifice of the end of the crank, so, that initially the end of the tube pushes the lug towards the centre of the crank end, then sliding inside the perimeter of the tube to be finally inserted in its orifice.

In this way the tube is joined to the crank by clipping, so that the union element prevents any axial displacement and does not withstand the loads due to the special configuration of the end of the crank and the tube.

Similarly, it is possible to join the other end of the tube with a Cardan joint or any transmission element with the same arrangement.

Said transmission element has an outer perimeter matching the inner perimeter of the tube and an orifice to insert the lug of the union element.

When the lug is introduced in the orifice of the transmission element, the head of the union element stops against the transmission element.

Then the transmission element is inserted in the tube, which has another orifice coincident with the orifice of the transmission element to house the lug of the union element.

As in the other end of the tube, the union element prevents any axial displacement and does not withstand loads, as these are transmitted directly from the tube to the transmission element.

### DESCRIPTION OF THE DRAWINGS

The present descriptive memory is completed by a set of drawings that illustrate the preferred embodiment and do not limit the invention.

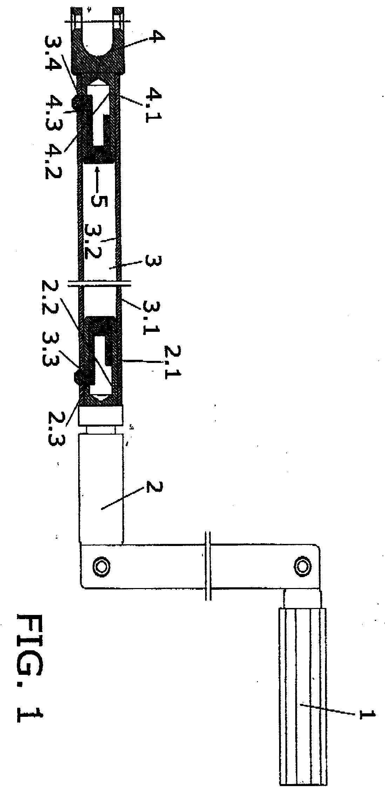

Figure 1 shoes a view of the union means for accessories for operating winding blinds object of the invention, showing a sectional view of the end of he crank, the tube, the union element and the transmission element.

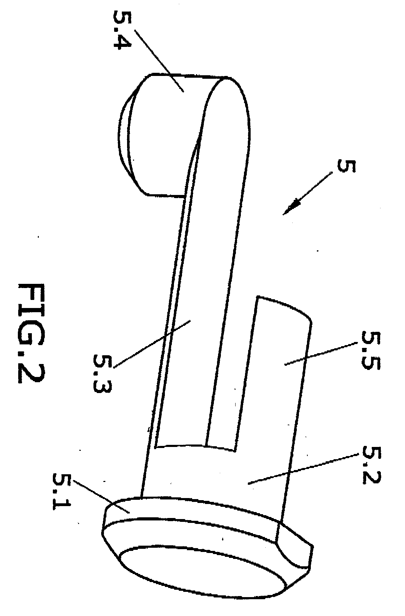

Figure 2 shoes a perspective view of the union element.

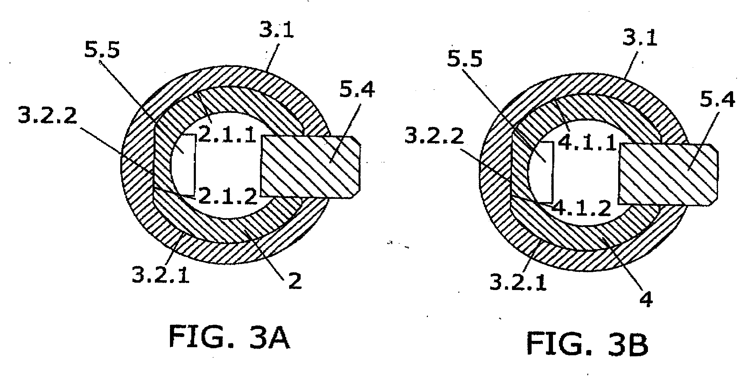

Figure 3A shows a sectional view showing the configuration of the tube, the handle, the lug and the tab of the union element. Figure 3B shows a sectional view showing the configuration of the tube, the transmission element, the lug and the tab of the union element, which are seen to be identical.

### PREFERRED EMBODIMENT OF THE INVENTION

In view of the above, the present description relates to means for joining accessories used to operate winding blinds of the type having a handle (1) joined to a crank (2) that is unequivocally inserted in a tube (3) due to the special configuration of the two.

The tube (3) has a preferably circular outer perimeter (3.1), while the inner perimeter (3.2) in which the crank (2) and the transmission element (5) are inserted has circular arc segments (3.2.1) and straight segments (3.2.2).

The crank (2), at its end that join to the tube, has an outer perimeter (2.1) matching the inner perimeter (3.2) of the tube (3), with circular arc segments (2.1.1) and straight segments (2.1.2) disposed identically to the circular arc segments (3.2.1) and straight segments (3.2.2) of the inner perimeter (3.2) of the tube (3).

Inside the end of the crank (2) is inserted a union element (5) whose head (5.1) has the same cross-section as the outer perimeter (2.1) of the crank (2) to stop against the end of the crank (2).

The union element (5) has a preferably cylindrical central part (5.2) with the same diameter as the inner perimeter (2.2) of the crank (2), from which emerges an elongated protrusion (5.3) followed by a lug (5.4) perpendicular to said protrusion (5.3); in addition, from said preferably cylindrical central part (5.2) emerges a tab (5.5).

When said tab (5.5) enters the union element (5.5) through the inner perimeter (2.2) of the crank (2), the elongated protrusion (5.3) will flex, the lug (5.4) will slide inside the inner perimeter (2.2) of the crank (2) and will insert in an orifice (2.3) of the end of the crank (2).

The tube (3) has an orifice (3,3) coincident with the orifice (2.3) of the end of the crank (2) used to attach the tube (3) to the crank (2) using the lug (5.4) of the union element (5).

Similarly, joined to the other end of the tube (3) is a transmission element (4) having an outer perimeter (4.1) coincident with the inner perimeter (3.2) of the tube (3), an inner perimeter (4.2) for inserting the union element (5) and an orifice (4.3) for inserting the lug (5.4) of the union element (5). The tube (3) also' has another orifice (3.4) that coincides with the orifice (4.3) of the transmission element (4) in order to house the lug (5.4) of the union element (5).

The essence of this invention is not affected by variations in the materials, shape, size and arrangement of the component elements, described in a non-limiting manner so that it should allow its reproduction by an expert in the field.

## Claims

1. Union means for accessories for operating winding blinds which may have a handle (1) joined to a crank (2) that transmits its motion through a tube (3) to a transmission element (4), **characterised in that** the tube (3) in which the crank (2) and the transmission element (4) are inserted has an inner perimeter (3.2) with at least one straight segment (3.2.2), coincident with an outer perimeter (2.1, 4.1) with at least one straight segment (2.1.1, 4.1.2) of the crank (2) and/or the load transmission element (4), being provided with a union element (5) having a head (5.1) that abuts the crank (2) and/or the transmission element (4), a tab (5.5) in contact with an inner perimeter (2.2, 4.2) of the crank (2) and/or the transmission element (4), and at least one protrusion (5.3) with a lug (5.4) on its end, inserted in orifices (2.3, 4.3) of the end of the crank (2) and/or the transmission element (4) coincident with orifices (3.3, 3.4) of the tube (3).

2. Union means for accessories for operating winding blinds according to claim 1, **characterised in that** the inner perimeter (3.2) of the tube (3) and the outer perimeter (2.1, 4.1) of the crank (2) and/or the transmission element (4) have one straight segment (3.2.2, 2.1.2, 4.1.2) and one circular arc segment. (3.2.1, 2.1.1, 4.1.1).

3. Union means for accessories for operating winding blinds according to claim 1, **characterised in that** the inner perimeter (3.2) of the tube (3) and the outer perimeter (2.1, 4.1) of the crank (2) and/or the transmission element (4) have two straight segments (3.2.2, 2.1.2, 4.1.2) and one circular arc segment (3.2.1, 2.1.1, 4.1.1).

4. Union means for accessories for operating winding blinds according to claim 1, **characterised in that** the inner perimeter (3.2) of the tube (3) and the outer perimeter (2.1, 4.1) of the crank (2) and/or the transmission element (4) have two straight segments (3.2.2, 2.1.2, 4.1.2) and two circular arc segments (3.2.1, 2.1.1, 4. 1. 1).

5. Union means for accessories for operating winding blinds according to claim 1, **characterised in that** the union element (5) has two protrusions (5.3) with its corresponding lugs (5.4).

6. Union means for accessories for operating winding blinds according to claim 1, **characterised in that** the lug (5.4) of the union element (5) is essentially perpendicular to the protrusion (5.3).

7. Union means for accessories for operating winding blinds according to claim 1, **characterised in that** the head (5.1) of the union element (5) has the same cross-section as the outer perimeter (2.1, 4.1) of the crank (2) and/or the transmission element (4).

8. Union means for accessories for operating winding blinds according to claim 1, **characterised in that** the union element (5) has a central part (5.2), preferably cylindrical, in contact with the inner perimeter (2.2, 4.2) of the crank (2) and/or the transmission element (4), from which emerge at least one protrusion (5.3) and the tab (5.3).
